# EUROPÄISCHE PATENTSCHRIFT

(11) **EP 1 146 409 B1**
(45) Veröffentlichungstag und Bekanntmachung des Hinweises auf die Patenterteilung: **13.10.2010**
(21) Anmeldenummer: 01109137.8
(22) Anmeldetag: 12.04.2001
(51) Int. Cl.: G05G 1/08

(54) **Bedienelement**
Control element
Dispositif de commande

(30) Priorität: 15.04.2000 DE 10018795
(43) Veröffentlichungstag der Anmeldung: 17.10.2001
(73) Patentinhaber: ROBERT BOSCH GMBH, 70442 Stuttgart (DE)
(72) Erfinder: Rosenbaum, Thomas, 71282 Hemmingen (DE); Kossira, Martin, 71672 Marbach am Necker (DE)

(56) Entgegenhaltungen:
- EP-A- 0 974 926
- EP-A1- 0 282 817
- DE-A1- 3 642 807
- DE-A1- 4 300 701
- DE-A1- 19 712 048
- DE-A1- 19 730 297
- US-A- 5 187 630

## Beschreibung

### Stand der Technik

Die Erfindung geht aus von einem Bedienelement nach der Gattung des Hauptanspruchs. Es ist schon ein Bedienelement als Teil einer Multifunktionsbedieneinrichtung aus der EP 366 132 B1 bekannt, bei der die Auswahl von Funktionsgruppen und individuellen Funktionen mittels eines Drehschalters erfolgt. Bei dem Drehschalter ist eine Enter-Funktion dadurch auslösbar, dass eine Axialbewegung desselben Drehschalters erfolgt. Durch die Integration der Enter-Funktion in den Drehknopf kann bei einer Auswahl einer Funktion mittels Drehen versehentlich der Knopf auch gedrückt werden, so dass unabsichtlich die Funktion gestartet wird. Dies kann z.B. bei einem Autoradio auftreten, das in ein Armaturenbrett oder eine Instrumententafel in einem Fahrzeug eingebaut ist. Infolge der Motorvibration können Schwingungen auftreten, die zu einer Relativbewegung zwischen der Hand eines Benutzers und dem Autoradio führen kann. Hierbei kann z.B. versehentlich die Enter-Funktion ausgelöst werden.

Aus der DE 197 12 048 A1 ist eine Bedienvorrichtung bekannt, bei der mit einem Stellglied in Form eines Drehschalters zwischen verschiedenen Funktionen ungeschaltet werden kann. In den Drehschalter ist ein abkippbares Stellglied integriert, dass einerseits zur Bewegung einer Anzeigemarke, andererseits aber auch zur Ausführung eines mit dem Drehschalter eingestellten Funktionswertes oder einer Funktion verwendet werden kann.

Aus der DE 197 30 297 A1 ist eine Bedienvorrichtung mit einer zweidimensionalen Dialogbewegung zum Anwählen und Auswählen von Funktionen und Funktionsgruppen bekannt. Hierbei ist vorgesehen, dass durch Drehen eines in einer ersten Axialstellung befindlichen Drehschalters der Dialog in einer ersten Dimension bewegbar ist und dass durch Drehen des in einer zweiten Axialstellung befindlichen Drehschalters der Dialog in einer zweiten Dimension bewegbar ist.

### Vorteile der Erfindung

Das erfindungsgemäße Bedienelement mit den Merkmalen des Hauptanspruchs hat demgegenüber den Vorteil, dass ein erster, drehbarer Bereich eines Bedienelements von einem zweiten, drückbaren und/oder ziehbaren Bereich des Bedienelements getrennt ist, der zum Bestätigen eines ausgewählten Funktionswertes oder zum Aufrufen einer ausgewählten Funktion dient. Durch die Trennung erfolgt ein Drehen des ersten Bereiches unabhängig von einem Drücken des zweiten Bereiches, so dass ein versehentliches Auslösen insbesondere des drückbaren Bereiches durch ein versehentliches Drücken auf den zweiten Bereich während des Drehvorgangs des ersten Bereiches vermieden wird. Ein versehentliches Auslösen einer Enter-Funktion nach dem Stand der Technik wird damit vermieden. Ferner wird durch das erfindungsgemäße Bedienelement vermieden, den zweiten Bereich bei einer Drehung des ersten Bereichs mitzudrehen. Somit kann der zweite Bereich mit einer Aufschrift versehen werden, über die eine Funktion des zweiten Bereiches erkennbar ist, ohne dass diese Aufschrift bei einem Drehen des Bedienelements verdreht wird.

Durch die in den Unteransprüchen aufgeführten Maßnahmen sind vorteilhafte Weiterbildungen und Verbesserungen des im Hauptanspruch angegebenen Bedienelements möglich. Besonders vorteilhaft ist, auch den ersten Bereich entlang seiner Drehachse beweglich auszuführen. Durch Kombination des Drucks der ersten Bereichs mit Drehbewegungen des ersten Bereichs einerseits und mit einem Druck auf den zweiten Bereich andererseits lassen sich die mit dem Bedienelement realisierbaren unterschiedlichen Funktionen erweitern, ohne neue Tasten anzuordnen.

Weiterhin ist vorteilhaft, den ersten Bereich gegenüber der Drehachse verkippbar auszuführen, da durch eine Auswertung der Kipprichtung einem Benutzer weitere Möglichkeiten gegeben werden, Informationen einzugeben, ohne die Anzahl der einem Benutzer zur Verfügung stehenden Eingabeelemente des Bedienelements zu erhöhen. Aus gleichen Grund ist vorteilhaft, den zweiten Bereich als eine Wipptaste auszuführen.

Weiterhin ist vorteilhaft, den zweiten Bereich von dem ersten Bereich eingeschlossen auszuführen, da hierdurch insbesondere eine platzsparende, kreisrunde Anordnung des ersten Bereiches um den zweiten Bereich herum möglich ist.

Vorteilhafterweise kann der erste, vorzugsweise ringförmige Bereich der Abstützung der bedienenden Hand des Benutzers dienen, wodurch eine Relativbewegung zwischen einem zu bedienenden Gerät bzw. dem Bedienelement und einer Hand des Benutzers im Vergleich zu dem bisherigen Stand der Technik eliminiert werden, da die Hand des Benutzers ansonsten zu Fehlbedienungen führen kann.

Weiterhin ist vorteilhaft, dass der erste und/oder der zweite Bereich jeweils in Raststufen schaltbar sind, da durch die Raststufen einem Benutzer eine Rückkopplung über die erfolgte Eingabe gegeben wird, die er erfühlen kann.

Weiterhin ist vorteilhaft, dass die Bewegung der Bereiche des Bedienelements durch einen Aktor beeinflussbar sind, da einem Benutzer hiermit eine haptische, also fühlbare, Rückmeldung über einen eingestellten bzw. einstellbaren Werte- oder Funktionsbereich gegeben wird.

Weiterhin ist vorteilhaft, den ersten und/oder den zweiten Bereich in Abhängigkeit von auswählbaren Funktionen oder von auswählbaren Funktionswerten farblich unterschiedlich zu beleuchten, da hierdurch für einen Benutzer ein Zustand des zu bedienenden Gerätes optisch erkennbar ist, insbesondere welche Funktionen ausgewählt werden können.

Eine Verwendung eines erfindungsgemäßen Bedienelements oder einer damit ausgestatteten Bedienvorrichtung in einem Kraftfahrzeug bietet besondere Vorteile, da in einem Kraftfahrzeug einerseits eine einfache, intuitive Bedienung für einen Fahrer erforderlich ist, der sich auf das Verkehrsgeschehen konzentrieren muß, und andererseits für Bedienelemente nur ein geringer Platz zur Verfügung steht. Das erfindungsgemäße Bedienelement bietet auf dem zur Verfügung stehenden Platz eine große Anzahl von verschiedenen Eingabemöglichkeiten.

### Zeichnung

Ausführungsbeispiele der Erfindung sind in der Zeichnung dargestellt und in der nachfolgenden Beschreibung näher erläutert. Es zeigen Figur 1 eine erfindungsgemäße Bedienvorrichtung mit einem erfindungsgemäßen Bedienelement zur Bedienung eines Fahrerinformationssystems in einem Kraftfahrzeug. Figur 2 zeigt ein erstes Ausführungsbeispiel für ein erfindungsgemäßes Bedienelement, Figuren 3, 4a, 4b, 5a, 5b, 7 zeigen weitere Ausführungsbeispiele für erfindungsgemäße Bedienelemente. Figuren 6a und 6b zeigen die Darstellung eines Auswahlmenüs zur Auswahl von Funktionen und Funktionswerten in einer Anzeige, die hier einem Fahrerinformationssystem zugeordnet ist, das über ein erfindungsgemäßes Bedienelement steuerbar ist.

### Beschreibung des Ausführungsbeispiels

Das erfindungsgemäße Bedienelement ist für die Bedienung beliebiger elektrischer Geräte einsetzbar. Bei der Bedienung ist in Folge der Vielzahl von Eingabemöglichkeiten eine Rückkopplung für den Benutzer vorteilhaft. Die Rückkopplung kann einerseits durch eine akustische Ausgabe des Eingegebenen erfolgen, also z.B. einen Hinweis auf eine ausgewählte Funktion oder einen eingegebenen Funktionswert enthalten, z.B. eine Aussage "Lautstärke Stufe 4 ist eingestellt" oder "Sie befinden sich im Hauptmenü". Ferner kann eine Rückkopplung an den Benutzer mittels einer Anzeige erfolgen, indem z.B. ausgewählte Funktionen hervorgehoben dargestellt sind, in einer anderen Farbe als die übrigen Funktionen oder mit einem Anzeigerahmen versehen. Außerdem kann eine Rückkopplung über eine mechanische Beeinflussung des Bedienelements erfolgen, so dass eine Bewegung dann gesperrt wird, wenn eine vorgegebener Eingabebereich durch eine Benutzereingabe verlassen werden soll. Beispielhaft wird die Funktionsweise des erfindungsgemäßen Bedienelements anhand der Verwendung des Bedienelements für ein Fahrerinformationssystem in einem Kraftfahrzeug im Folgenden erläutert.

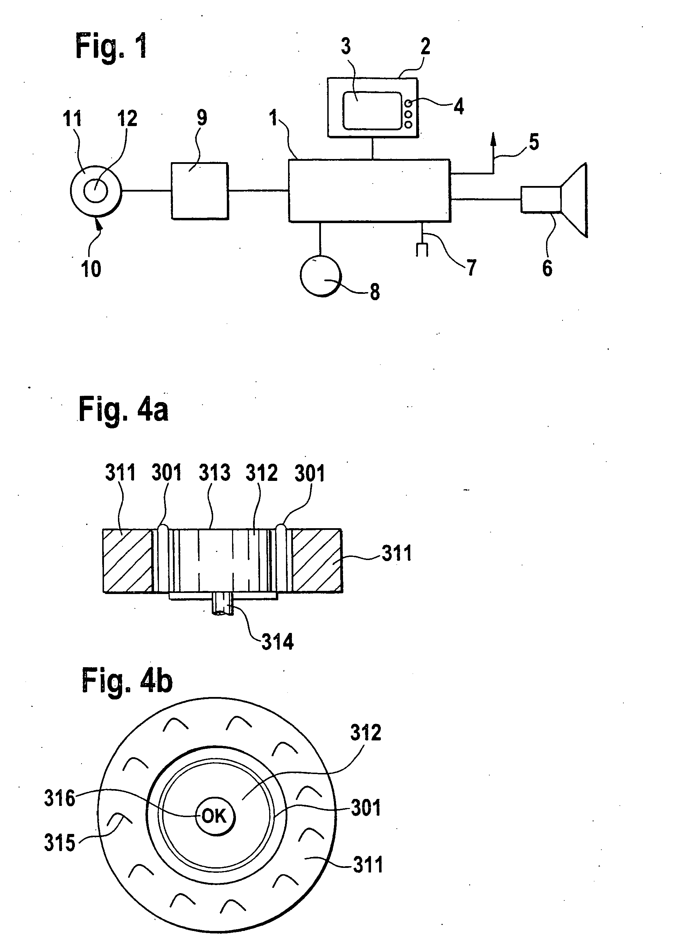

In Figur 1 ist ein Fahrerinformationssystem in einem Kraftfahrzeug mit einer Recheneinheit 1 dargestellt. Mit der Recheneinheit 1 ist eine Anzeigeeinheit 2 mit einer Anzeigefläche 3 und vorzugsweise mit neben der Anzeigefläche 3 angeordneten, weiteren Tasten 4 verbunden. Ferner ist die Recheneinheit 1 mit einer Kommunikationsschnittstelle 5, z.B. einem GPS-Empfänger, einer UKW-Empfangseinheit und/oder einer Mobilfunkschnittstelle verbunden. An die Recheneinheit 1 ist ferner ein Lautsprecher 6 zur Ausgabe von akustischen Informationen angeschlossen. Über einen Datenbus 7 ist die Recheneinheit 1 mit anderen Fahrzeugsystemen, so z.B. einer Klimaregelung oder mit Fahrzeugaußensensoren, verbunden. Die Recheneinheit 1 kann ferner auf Datenlaufwerke 8 zugreifen, so z.B. Datenträgerlaufwerke für Datenträger mit Musik- oder Navigationsdaten. Ferner ist die Recheneinheit 1 mit einer Bedienvorrichtung verbunden, die aus dem Bedienelement 10 und der Auswerteeinheit 9 gebildet wird. Das Bedienelement 10 weist einen ersten Bereich 11 und einen zweiten Bereich 12 auf.

Das Fahrerinformationssystem dient z.B. der Klimaregelung im Fahrzeug, der Steuerung des Autoradios und der Fahrzeugnavigation. Ein aktueller Zustand des Fahrerinformationssystems wird auf der Anzeigefläche 3 der Anzeigeeinheit 2 angegeben. Für einen Radiobetrieb wird z.B. über die Kommunikationsschnittstelle 5 mittels des enthaltenen UKW-Empfängers ein Audiosignal ermittelt und über den Lautsprecher 6 ausgegeben. Für eine Musikwiedergabe kann ein in eines der Datenträgerlaufwerke 8 eingelegter Datenträger ausgelesen werden und die Musik ebenfalls über den Lautsprecher 6 ausgegeben werden. Für eine Fahrzeugnavigation wird mittels des Bedienelements 10 ein Fahrziel eingegeben. Über den GPS-Empfänger der Kommunikationsschnittstelle 5 wird eine aktuelle Fahrzeugposition bestimmt und von der Recheneinheit 1 wird eine Fahrtroute von der ermittelten Startposition zu der über das Bedienelement 10 eingegebenen Zielposition bestimmt und Fahrhinweise werden über die Ansageeinheit 2 und den Lautsprecher 6 ausgegeben. In einem bevorzugten Ausführungsbeispiel kann die Auswerteeinheit 9 auch in die Recheneinheit 1 integriert sein. Das Bedienelement 10 ist an einer für einen Benutzer gut zugänglichen Stelle des Fahrzeugs, so z.B. an der Mittelkonsole, angeordnet. Damit eine Bedienung auch bei Nacht erfolgen kann, ist das Bedienelement 10 beleuchtbar, wobei vorzugsweise der erste Bereich 11 und der zweite Bereich 12 in unterschiedlichen Farben erscheinen. In Abhängigkeit von eingebbaren Funktionen können sich diese Farben ändern. Ist z.B. eine Funktionsauswahl zur Zeit nicht möglich, weil z.B. noch eine andere Funktion ausgeführt wird, kann dies durch eine rote Beleuchtung kenntlich gemacht werden, während die Beleuchtung des Bedienelements sonst z.B. grün oder blau ist.

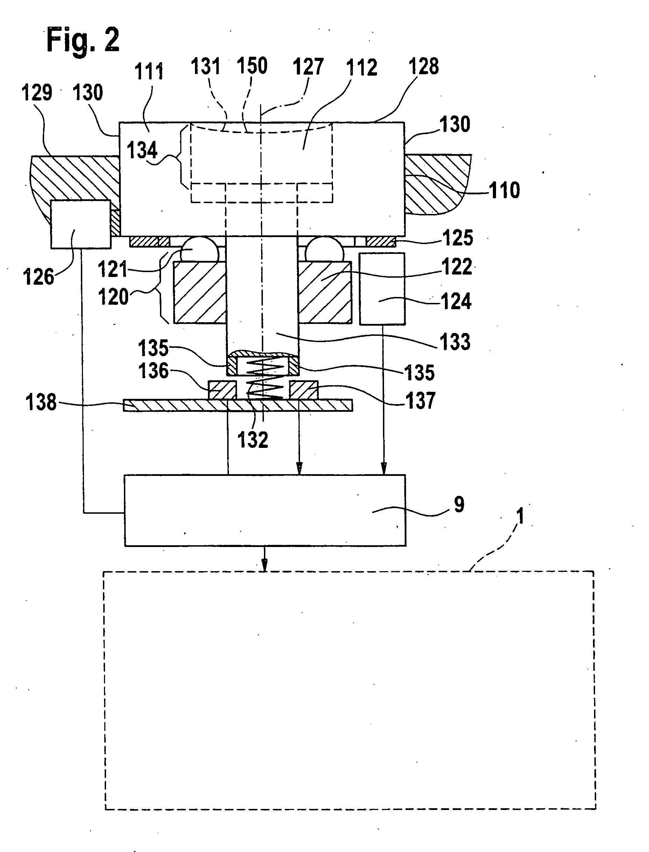

In der Figur 2 ist ein erstes Ausführungsbeispiel für ein erfindungsgemäßes Bedienelement 110 dargestellt. Ein erster Bereich 111 des Bedienelements 110 ist als ein Drehknopf ausgeführt, der auf einem Lager 120 gelagert ist, das vorzugsweise als ein Kugellager ausgeführt ist. Das Lager 120 weist Kugeln 121 auf, die in einer Halterung 122 drehbar sind und die eine Drehbarkeit des ersten Bereichs um eine gestrichelt eingezeichnete, zumindest ungefähr senkrecht zu einer Oberfläche 150 des zweiten Bereichs 112 und damit einer Oberfläche der muldenförmigen Vertiefung 150 verlaufende Drehachse 127 ermöglichen. Eine Drehung des ersten Bereichs 111 ist über einen Messaufnehmer 124 auslesbar. In dem vorliegenden Ausführungsbeispiel liest der Messaufnehmer 124 von einem an dem ersten Bereich angeordneten Zahnrad 125 codierte Informationen aus, die an dem Zahnrad 125 angeordnet sind. Über einen Aktor 126 ist eine Drehung des ersten Bereiches 111 um die Drehachse 127 beeinflußbar, indem die Drehung behindert bzw. gesperrt wird. Der erste Bereich 111 ist ringförmig um einen zweiten Bereich 112 herum angeordnet, der in der Figur 2 gestrichelt dargestellt ist, und weist eine ringförmig verlaufende, einem Benutzer zuweisende Oberfläche 128 auf. Der erste Bereich 111 ragt dabei in einem ersten Ausführungsbeispiel über eine Oberfläche 129 hervor, die z.B. von einer Mittelkonsole des Fahrzeugs gebildet wird. In einem weiteren Ausführungsbeispiel kann die Oberfläche 128 auch bündig mit der Oberfläche 129 abschließen. Durch eine tangentiale Kraftausübung auf Seitenwände 130 des ersten Bereichs 111 oder durch eine auf die Oberfläche 128 wirkende Schiebebewegung ist der erste Bereich 111 in den Lagern 120 um die Drehachse 127 drehbar.

In einem bevorzugten Ausführungsbeispiel weist der zweite Bereich 112 eine muldenförmige Vertiefung 131 auf, die zur Führung des Fingers eines Benutzers dient. Der zweite Bereich 112 ist parallel zu der Drehachse 127 gegen die Spannung eines Federelementes 132 beweglich angeordnet. Das Federelement 132 ist zwischen einem Taststößel 133 des zweiten Bereichs 112 und einer Leiterplatte 138 angeordnet Der Taststößel 133 durchquert das Lager 120 und den ersten Bereich 111, die jeweils eine Öffnung für die Durchführung des Taststößels 133 aufweisen. Hin zu der Oberfläche 128 erweitert sich der Taststößel 133 zu einem Tastenkopf 134. An der der Leiterplatte 138 zuweisenden Seite des Taststößels 133 sind elektrische Kontakte 135 rundumlaufend angeordnet, vorzugsweise in der Form eines Kontaktrings, die bei einem Druck auf die muldenförmige Vertiefung 131 und bei einer Verschiebung des zweiten Bereiches 112 gegen den Druck des Federelementes 132 einen ersten elektrischen Kontakt 136 und einen zweiten elektrischen Kontakt 137, die auf der Leiterplatte 138 angeordnet sind, elektrisch leitend verbinden. Die Auswerteeinheit 9 wertet Signale des Messaufnehmers 124 und eine Verbindung der ersten und zweiten elektrischen Kontakte 136 und 137 aus und gibt die ausgewerteten Informationen an die Recheneinheit 1 weiter. Hierzu verfügt die Auswerteeinheit 9 zumindest über einen in der Figur 2 nicht dargestellten Mikroprozessor. Ferner wird von der Auswerteeinheit 9 der Aktor 126 angesteuert, mit dem einerseits Raststufen des ersten Bereiches 111 realisierbar sind oder mit dem eine Drehbewegung des ersten Bereiches 111 gesperrt werden kann. Eine Beleuchtung des ersten und/oder zweiten Bereiches 111, 112 ist in der Figur 2 nicht dargestellt. Hierzu sind jedoch vorzugsweise an der Leiterplatte 138 bzw. dem Lager 120 Beleuchtungsvorrichtungen, Z.B. Leuchtdioden, angeordnet. Der erste Bereich 111 und der zweite Bereich 112 sind vorzugsweise aus einem Kunststoffmaterial ausgebildet, das zumindest teilweise lichtdurchlässig ist. Dabei sind die Oberfläche 128 und/oder die Oberfläche 150 der muldenförmigen Vertiefung 131 beschriftet ausgeführt. Eine Bewegung des Zahnrades 125 ist durch den Messaufnehmer 124 vorzugsweise optisch auslesbar, in dem z.B. eine unterschiedliche Reflektivität eines Aufdrucks oder das Vorbeistreichen eines Zahnradzahnes durch den Messaufnehmer 124 registriert wird. Der erste Bereich 111 kann in zwei Richtungen, nämlich eine rechtsgerichtete und eine linksgerichtete Drehung, d.h. im und gegen den Uhrzeigersinn, gedreht werden. Durch die axiale Verschiebbarkeit des zweiten Bereiches 112 sind zwei Zustände möglich: 1) Der zweite Bereich ist in einem Ausgangszustand, die elektrische Verbindung ist zwischen dem ersten elektrischen Kontakt 136 und dem zweiten elektrischen Kontakt 137 offen (zweiter Bereich nicht gedrückt). Oder: 2) Der zweite Bereich 112 ist gedrückt; dann sind die elektrischen Kontakte 136, 137 miteinander verbunden.

Für das vorliegende Bedienelement ist daher z.B. die folgende Ansteuerungsvorschrift möglich:

| | | |
|---|---|---|
| Zweiter Bereich nicht gedrückt | Erster Bereich nach rechts gedreht (Uhrzeigersinn) | Funktionswert oder Funktion wird in eine erste Richtung geändert |
| Zweiter Bereich nicht gedrückt | Erster Bereich nach links gedreht (gegen Uhrzeigersinn) | Funktionswert oder Funktion wird in eine zweite Richtung geändert |
| Zweiter Bereich gedrückt | Keine Drehung des ersten Bereichs | Ausgewählter Funktionswert oder Funktion werden ausgewählt bzw. aufgerufen |

Als ein weiteres Ausführungsbeispiel ist folgende Ansteuerungsvorschrift möglich:

| | | |
|---|---|---|
| Zweiter Bereich nicht gedrückt | Erster Bereich nach rechts gedreht (Uhrzeigersinn) | Funktionswert oder Funktion wird in eine erste Richtung geändert |
| Zweiter Bereich nicht gedrückt | Erster Bereich nach links gedreht (Gegen Uhrzeigersinn) | Funktionswert oder Funktion wird in eine zweite Richtung geändert |
| Zweiter Bereich gedrückt | Erster Bereich nach rechts gedreht | Funktionswert oder Funktion wird in eine dritte Richtung geändert |
| Zweiter Bereich gedrückt | Erster Bereich wird nach links gedreht | Funktionswert oder Funktion wird in eine vierte Richtung geändert |
| Zweiter Bereich wird für mindestens eine vorgegebene Zeitdauer (z.B. 1 Sekunde) gedrückt | Erster Bereich ruht | Ausgewählter Funktionswert wird ausgewählt oder Funktion wird aufgerufen |

Dieses Ausführungsbeispiel eignet sich insbesondere für die Auswahl eines Funktionswertes oder einer Funktion aus einem zweidimensionalen, in einer Anzeige dargestellten Auswahlfeld.

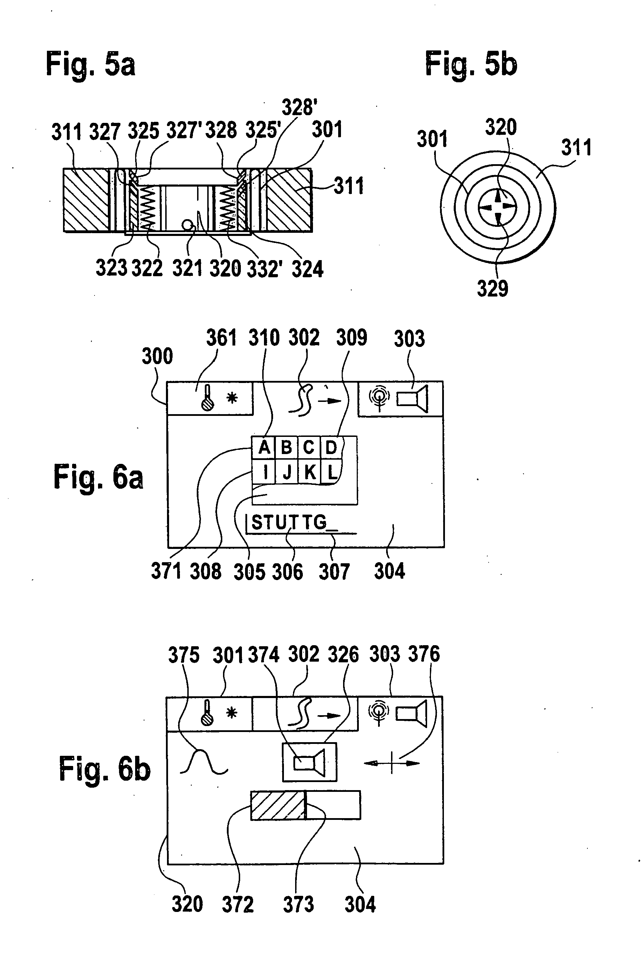

Ein Ausführungsbeispiel für die Anwendung des erfindungsgemäßen Bedienelements ist in den Figuren 6a und 6b dargestellt, wobei Beispiele für die Begriffe 'Funktion' und 'Funktionswert' gegeben werden. Beide Figuren zeigen eine Darstellung des Inhaltes der Anzeigefläche 3 eines Fahrerinformationssystems in einem Kraftfahrzeug. An der Oberseite der Anzeigendarstellung 300 in der Figur 6a ist ein erstes Symbol 361 dargestellt, das eine Klimaregelung symbolisiert. Ein zweites Symbol 302 ist dargestellt, das eine Fahrzeugnavigation symbolisiert und ein drittes Symbol 303, das eine Audiosteuerung symbolisiert. Das zweite Symbol 302 ist grafisch mit der übrigen Anzeigefläche 304 verbunden, wodurch deutlich wird, dass sich die übrigen dargestellten Angaben auf die Fahrzeugnavigation beziehen. In der übrigen Anzeigefläche 304 ist ein Buchstabenfeld 305 dargestellt, das zur Eingabe eines Fahrziels 306 dient, von dem schon teilweise Buchstaben in einer Textanzeige 307 dargestellt sind. Das Buchstabenfeld 305 ist aus Gründen der Übersichtlichkeit der Zeichnung nur teilweise dargestellt. Das Buchstabenfeld 305 weist einzelne Zeilen 308 und Spalten 309 auf, wobei jedem Zeilen- und Spalteneintrag ein Buchstabe 310 zugeordnet ist. In dem hier gewählten Ausführungsbeispiel ist der Buchstabe A mit einem Auswahlrahmen 371 umgeben. In diesem Zusammenhang ist unter dem Wechsel eines Funktionswertes ein Wechsel von einem z.B. mittels des Auswahlrahmens markierten, ausgewählten Buchstaben zu einem nächsten Buchstaben, beispielsweise von A nach B zu verstehen. Eine Bewegung nach rechts ist als eine erste Richtung des Wechsels eines Funktionswertes, eine Bewegung nach links als eine zweite Richtung, eine Bewegung nach unten als eine dritte Richtung und eine Bewegung nach oben als eine vierte Richtung festlegbar. Hierbei sind beliebige andere Zuordnungen der Bewegungsrichtungen des Bedienelements zu Bewegungsrichtungen in dem Buchstabenfeld möglich. Ferner ist auch möglich, bei einem Erreichen eines Randes des Buchstabenfeldes entweder in eine nächste Zeile zu springen, in der gleichen Zeile auf die entgegengesetzte Seite des Buchstabenfeldes zu springen oder bei einer solchen Bedienung gar keine Veränderung vorzunehmen und mit einer Beeinflussung des Bedienelements 110 über den Aktor 126 einem Benutzer ein Erreichen eines Randes des Buchstabenfeldes 305 mitzuteilen. Zur Eingabe eines wie beschrieben mit dem Auswahlrahmen markierten Buchstabens ist der zweite Bereich 112 zu drücken (erstes, oben beschriebenes Ausführungsbeispiel) oder der zweite Bereich ist zu drücken und mindestens für eine vorgegebene Zeitdauer gedrückt zu halten (zweites, oben beschriebenes Ausführungsbeispiel). Unter dem Wechsel einer Funktion ist in diesem Zusammenhang ein Wechsel von der Funktion der Navigation zu der Funktion der Audiosteuerung oder der Klimaregelung zu verstehen. Während bei einer Eingabe des Fahrziels in das Textfeld zunächst eine Bestätigung mittels des zweiten Bereichs abgewartet wird, kann ein Wechsel der Funktion auch ohne eine zusätzliche Bestätigung erfolgen.

In der Figur 6b ist ein weiteres Ausführungsbeispiel angegeben, wobei in einer Anzeigedarstellung nun das dritte Symbol 303 für die Audiosteuerung mit dem übrigen Bereich 304' der Anzeige verbunden ist. In einer Balkenanzeige 372 ist eine Lautstärkeneinstellung durch einen Balkenstand 373 wiedergegeben, wobei der Hinweis auf eine Lautstärkeneinstellung durch ein Lautsprechersymbol 374 gegeben ist, das durch einen Auswahlrahmen 326 eingerahmt ist. Wird nun ein Funktionswert geändert, so wird der Balkenstand 373 variiert. Wird eine andere Funktion gewählt, so z.B. eine Tonhöhe, die durch ein zweites Symbol 375 dargestellt ist oder eine Balance zwischen zwei verschiedenen Lautsprechern, die durch ein drittes Symbol 376 dargestellt ist, so wird ein Auswahlrahmen 326 von dem Lautsprechersymbol 374 zu dem zweiten bzw. dem dritten Symbol 375, 376 verschoben, und es wird eine entsprechende jeweilige Balkenanzeige hierzu dargestellt. Ferner kann auch eine übergeordnete Funktion geändert werden, indem z.B. das Navigationssystem aufgerufen wird. Eine solche Änderung kann z.B. durch einen längeren Druck auf den zweiten Bereich ausgelöst werden. Hierbei kann z.B. durch eine farbliche Änderung der Beleuchtung des Bedienelements angezeigt werden, dass zur Zeit eine Änderung des Funktionswerts nur in zwei und nicht, wie bei der Auswahl aus dem Buchstabenfeld, in vier Richtungen möglich ist.

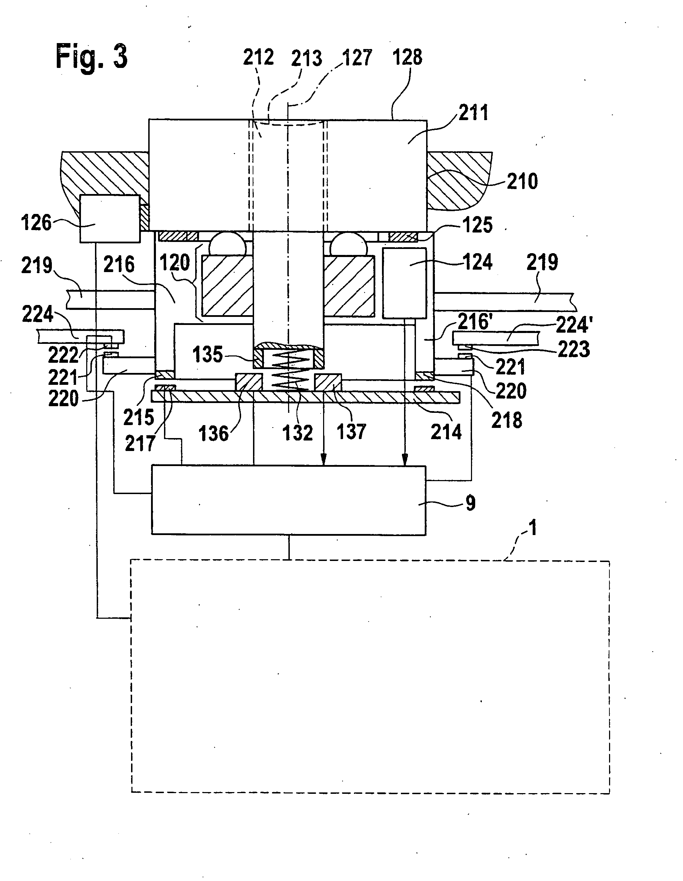

In der Figur 3 ist ein weiteres Ausführungsbeispiel eines erfindungsgemäßen Bedienelements 210 dargestellt, wobei hier ein erster Bereich 211 parallel zu der Drehachse 127 des Bedienelements bewegbar ist. Hier und im folgenden bezeichnen die gleichen Bezugszeichen auch die gleichen Elemente. Ein zweiter Bereich 212 ist stabförmig mit einer muldenförmigen Vertiefung 213 durch eine konzentrische Öffnung in dem ersten Bereich 211 gesteckt, durchquert das Lager 120 und gelangt zu den elektrischen Kontakten 136 und 137, die entsprechend dem anhand der Figur 2 erläuterten Beispiel ausgeführt sind. Mit dem ersten Bereich ist der Aktor 126, das Lager 120 und der Messaufnehmer 124 entlang der Drehachse herum um den zweiten Bereich 212 verschiebbar. Wird auf den ersten Bereich 211 ein Druck in Richtung einer Leiterplatte 214 ausgeübt, die auf der einem Benutzer abgewandten Seite des ersten Bereichs 211 angeordnet ist und die den ersten elektrischen Kontakt 136 und den zweiten elektrischen Kontakt 137 trägt, so werden die ersten und zweiten elektrischen Kontakte 136, 137 durch die elektrischen Kontakte 135 verbunden. Über einen rundumlaufenden elektrischen Kontakt 215, der über Halterungen 216, 216' mit dem ersten Bereich 211 verbunden ist, ist eine Verbindung eines dritten elektrischen Kontaktes 217 mit einem vierten elektrischen Kontakt 218 möglich. Hierzu ist der erste Bereich 211 gegen Federn 219 entlang der Drehachse 127 verschiebbar, wobei der erste Bereich 211 an den Federn 219 aufgehängt ist, die dazu dienen, dass bei einem nachlassenden Druck auf den ersten Bereich 211 der erste Bereich 211 in seine Ausgangslage zurück bewegt wird. Ein Herausziehen des ersten Bereiches 211 führt dazu, dass an Kontaktarmen 220 angeordnete elektrische Kontakte 221 einen fünften elektrischen Kontakt 222 und einen sechsten elektrischen Kontakt 223 kontaktieren, die an Halterungen 224, 224'angeordnet sind. Hierdurch ist möglich, sowohl ein Herausziehen des ersten Bereiches als auch ein Drücken auf den ersten Bereich entlang der Drehachse 127 unabhängig von einer Drehstellung des ersten Bereiches durch die Auswerteeinheit 9 zu erfassen.

Im folgenden ist ein erstes Ausführungsbeispiel für eine Ansteuerungsvorschrift des Bedienelements gemäß der Figur 3 für die Auswahl von Funktionen und/oder Funktionswerten aus einem zweidimensionalen Feld angegeben:

| | | |
|---|---|---|
| Ber. 2 nicht gedrückt | Ber. 1 nach links gedreht | Verschiebung Funktionswert nach links |
| Ber. 2 nicht gedrückt | Ber. 1 nach rechts gedreht | Verschiebung Funktionswert nach rechts |
| Ber. 2 gedrückt | Ber. 1 nach links gedreht | Verschiebung Funktionswert nach unten |
| Ber. 2 gedrückt | Ber. 1 nach rechts gedreht | Verschiebung Funktionswert nach oben |
| Ber. 2 gezogen | Ber. 1 nach links gedreht | Verschiebung Funktion nach links |
| Ber. 2 gezogen | Ber. 1 nach rechts gedreht | Verschiebung Funktion nach rechts |

| | | |
|---|---|---|
| Ber. = Bereich | | |

Sollte das erfindungsgemäße Bedienelement nur gedrückt, jedoch nicht herausgezogen werden können, so kann eine Funktionsauswahl entsprechend der letzten beiden Zeilen der obigen Tabelle dadurch erreicht werden, dass jeweils der erste und der zweite Bereich bei einer Drehung des ersten Bereichs gedrückt werden.

In den Figuren 4a und 4b ist ein weiteres Ausführungsbeispiel für ein erfindungsgemäßes Bedienelement dargestellt, wobei die Figur 4a einen Querschnitt und die Figur 4b eine Aufsicht auf das Bedienelement zeigen. Eine Abtrennung 301 trennt einen ersten Bereich 311, der kreisförmig um die Abtrennung 301 verläuft. Innerhalb der Abtrennung 301 ist ein zweiter Bereich 312 angeordnet. Eine Drehung des ersten Bereichs 311 ist dabei unabhängig von einer Verschiebung des zweiten Bereichs 312 auswertbar, der vorzugsweise über einen Taststößel 314 verfügt, dessen Bewegung elektrisch detektierbar ist und bei dem ein Federelement einer auf eine Auflagefläche 313 wirkenden Kraft entgegenwirkt. In einem weiteren, in der Figur 4a nicht gezeigten Ausführungsbeispiel ist auch möglich, den zweiten Bereich 312 als eine Folientaste auszuführen. In der Figur 4b ist in einer Aufsicht das Bedienelement dargestellt, wobei in dem ersten Bereich Oberflächenaufrauungen- oder Profilierungen 315 angeordnet sind, die eine bessere Erfassung des ersten Bereichs 311 durch einen Benutzer ermöglichen. Durch die Abtrennung 301 insbesondere in Form einer Trennwand ist eine ebenfalls für einen Benutzer erfühlbare Abtrennung zwischen dem ersten Bereich 311 und dem zweiten Bereich 312 möglich. In dem zweiten Bereich 312 ist eine Beschriftung 316 angeordnet, die auch bei einer Drehung des ersten Bereiches nicht verändert wird, da sich der zweite Bereich 312 nicht mitdreht.

In der Figur 5a ist als weiteres Ausführungsbeispiel der Ausführung des zweiten Bereichs als eine Kreuzwippe dargestellt. Die Figur 5a zeigt dabei einen Querschnitt, Figur 5b eine Aufsicht. In einem weiteren, in den Figuren 5a und 5b nicht dargestellten Ausführungsbeispiel ist auch eine Ausführung der Kreuzwippe als eine nur in zwei Richtungen bewegliche Wippe möglich. In einem bevorzugten Ausführungsbeispiel wird dabei der erste Bereich 311 durch eine Abtrennung 301 von dem zweiten Bereich 320 abgetrennt. Der zweite Bereich 320 ist um eine Drehachse 321 gegen Federelemente 322, 322' gegen einen ersten Anschlag 323 und einen zweiten Anschlag 324 bewegbar. Die Federelemente 322, 322' führen bei nachlassendem Druck auf den zweiten Bereich 320 zu einer Rückstellung in die Ausgangslage. Der zweite Bereich 320 verfügt dabei über angeschrägte, mit einer leitfähigen Schicht versehene Kantenflächen 325, 325', die bei einer Berührung eines der Anschläge 323, 324 zu einer elektrischen Verbindung von an den Anschlägen angeordneten elektrischen Kontakten 327, 327' bzw. 328, 328' führen. Hierdurch ist eine Berührung der Anschläge durch die Wippe erfassbar. Zu einer besseren Orientierung eines Benutzers können dabei entsprechende Pfeilrichtungen 329 auf den zweiten Bereich aufgedruckt sein. Hierbei ist ein entsprechender Bereich eines Anschlags einer Pfeilrichtung deutlich zuzuordnen.

Die Kreuzwippe kann hierbei eine Auswahl in einem zweidimensionalen Feld ermöglichen. Eine Bestätigung eines ausgewählten Funktionswertes bzw. ein Aufruf einer ausgewählten Funktion kann dabei entweder über einen Druck auf den ersten Bereich 311 oder über einen Druck auf eine der Pfeilrichtungen 329 für eine bestimmte Zeit erfolgen. Für den Fall, dass gemäß der Figur 6b eine Auswahl zu treffen ist, kann diese Auswahl zusätzlich durch eine Drehbewegung des ersten Bereichs 311 getroffen werden, während den Funktionstasten ein Wechsel von auswählbaren Funktionen, z.B. zwischen der Tonhöhe, dem zweiten Symbol 375, und der Balance, dem dritten Symbol 376, zugeordnet wird.

## Patentansprüche

1. Verfahren für eine Bedienung eine Bedienvorrichtung, wobei ein erster, drehbarer Bereich (111, 211, 311), der als ein Drehknopf ausgeführt ist, und ein zweiter zienbarer und/oder drückbarer Bereich (112, 212, 312, 320) des Bedienelements unabhängig voneinander bedient werden, wobei durch ein Drehen des ersten Bereichs (111, 211, 311) ein Funktionswert (310, 373) und/oder eine Funktion (361, 302, 303) ausgewählt werden und wobei durch ein Drücken oder Ziehen des zweiten Bereichs (112, 212, 312, 320) der ausgewählte Funktionswert bestätigt wird und/oder die ausgewählte Funktion aufgerufen wird, wobei bei einem Drehen des ersten Bereichs (111, 211, 311) ohne eine Betätigung des zweiten Bereichs (112, 212, 312, 320) eine erste Auswahl und bei einem Drehen des ersten Bereichs (111, 211, 311) bei einer zeitgleichen Betätigung des zweiten Bereichs (112, 212, 312, 320) eine zweite Auswahl von Funktionswerten und/oder Funktionen ausgewählt wird.

2. Verfahren nach Anspruch 1, **dadurch gekennzeichnet, dass** der erste Bereich (111, 211, 311) um eine Drehachse (127) bewegt wird.

3. Verfahren nach Anspruch 2, **dadurch gekennzeichnet, dass** Funktionswerte (310, 373) und/oder Funktionen (361, 302, 303) durch Drücken und/oder Ziehen des ersten Bereichs (111, 211, 311) bestätigt, ausgewählt und/oder aufgerufen werden.

4. Verfahren nach einem der vorhergehenden Ansprüche, **dadurch gekennzeichnet, dass** der erste Bereich (111, 211, 311) und/oder der zweite Bereich (112, 212, 312, 320) gegenüber der Drehachse (127, 321) verkippt werden.

5. Verfahren nach einem der vorhergehenden Ansprüche, **dadurch gekennzeichnet, dass** der erste und/oder der zweite Bereich in Raststufen geschaltet werden.

6. Verfahren nach einem der vorhergehenden Ansprüche, **dadurch gekennzeichnet, dass** der erste und/oder der zweite Bereich in Abhängigkeit von der auswählbaren Funktion und/oder von den auswählbaren Funktionswerten farblich unterschiedlich beleuchtet werden.

7. Verfahren nach einem der vorhergehenden Ansprüche, **dadurch gekennzeichnet, dass** eine Bewegung der Bereiche des Bedienelements (11, 110) durch einen Aktor (126) beeinflusst wird.

## Claims

1. Method for operating an operator control, wherein a first rotatable region (111, 211, 311), which is embodied as a rotary knob, and a second pullable and/or pressable region (112, 212, 312, 320) of the operator control can be operated independently of one another, wherein, by rotating the first region (111, 211, 311) a functional value (310, 373) and/or a function (361, 302, 303) are selected, and wherein by pressing or pulling the second region (112, 212, 312, 320) the selected functional value is confirmed and/or the selected function is called, wherein a first selection of function values and/or functions is made when the first region (111, 211, 311) is rotated without confirmation of the second region (112, 212, 312, 320), and a second selection of functional values and/or functions is made when the first region (111, 211, 311) is rotated while at the same time the second region (112, 212, 312, 320) is confirmed.

2. Method according to Claim 1, **characterized in that** the first region (111, 211, 311) is moved about a rotational axis (127).

3. Method according to Claim 2, **characterized in that** functional values (310, 373) and/or functions (361, 302, 303) are confirmed, selected and/or called by pressing and/or pulling the first region (111, 211, 311).

4. Method according to one of the preceding claims, **characterized in that** the first region (111, 211, 311) and/or the second region (112, 212, 312, 320) are tilted with respect to the rotational axis (127, 321).

5. Method according to one of the preceding claims, **characterized in that** the first and/or the second regions are switched in latching stages.

6. Method according to one of the preceding claims, **characterized in that** the first and/or the second region are illuminated in different colours depending on the selectable function and/or the selectable functional values.

7. Method according to one of the preceding claims, **characterized in that** a movement of the regions of the operator control (11, 110) is influenced by an actuator (126).

## Revendications

1. Procédé pour commander un dispositif de commande, une première zone tournante (111, 211, 311), qui est réalisée sous la forme d'un bouton tournant, et une deuxième zone sur laquelle il est possible de tirer et/ou d'appuyer (112, 212, 312, 320) de l'élément de commande étant commandées indépendamment l'une de l'autre, une valeur de fonction (310, 373) et/ou une fonction (361, 302, 303) étant sélectionnée(s) par une rotation de la première zone (111, 211, 311) et la valeur de fonction sélectionnée étant validée et/ou la fonction sélectionnée étant appelée par un appui ou une traction sur la deuxième zone (112, 212, 312, 320), une première sélection étant effectuée lors d'une rotation de la première zone (111, 211, 311) sans actionnement de la deuxième zone (112, 212, 312, 320) et une deuxième sélection de valeurs de fonctions et/ou de fonctions étant effectuée lors d'une rotation de la première zone (111, 211, 311) et d'un actionnement simultané de la deuxième zone (112, 212, 312, 320).

2. Procédé selon la revendication 1, **caractérisé en ce que** la première zone (111, 211, 311) est déplacée autour d'un axe de rotation (127).

3. Procédé selon la revendication 2, **caractérisé en ce que** des valeurs de fonctions (310, 373) et/ou des fonctions (361, 302, 303) sont activées, sélectionnées et/ou appelées par appui et/ou traction sur la première zone (111, 211, 311).

4. Procédé selon l'une des revendications précédentes, **caractérisé en ce que** la première zone (111, 211, 311) et/ou la deuxième zone (112, 212, 312, 320) est/sont inclinée(s) par rapport à l'axe de rotation (127, 321).

5. Procédé selon l'une des revendications précédentes, **caractérisé en ce que** la première et/ou la deuxième zone(s) est/sont enclenchée(s) dans des paliers d'arrêt.

6. Procédé selon l'une des revendications précédentes, **caractérisé en ce que** la première et/ou la deuxième zone(s) est/sont éclairée(s) de différentes couleurs selon la fonction pouvant être sélectionnée et/ou les valeurs de fonctions pouvant être sélectionnées.

7. Procédé selon l'une des revendications précédentes, **caractérisé en ce qu'**un mouvement des zones de l'élément de commande (11, 110) est influencé par un actionneur (126).
